# EUROPEAN PATENT SPECIFICATION

(11) **EP 3 149 617 B1**
(45) Date of publication and mention of the grant of the patent: **17.10.2018**
(21) Application number: 15728269.0
(22) Date of filing: 19.05.2015
(51) Int. Cl.: G11B 27/036, H04N 101/00, H04N 5/232, G11B 27/00

(54) **METHOD AND CAMERA FOR COMBINING STILL- AND MOVING- IMAGES INTO A VIDEO.**
VERFAHREN UND CAMERA ZUM KOMBINIEREN VON STEHENDEN UND BEWEGLICHEN BILDERN ZU EINEM VIDEO.
MÉTHODE ET APPAREIL PHOTO POUR COMBINER PHOTOS ET VIDEOS EN UN FILM .

(30) Priority: 27.05.2014 US 201462003281 P; 02.09.2014 US 201414475214
(43) Date of publication of application: 05.04.2017
(73) Proprietor: Thomson Licensing, 92130 Issy-les-Moulineaux (FR)
(72) Inventor: VOSS, Neil D., Darien, Connecticut 06820 (US)
(74) Representative: Vidon Brevets & Stratégie
(86) International application number: PCT/US2015/031604
(87) International publication number: WO 2015/183637

(56) References cited:
- EP-A1- 2 359 368
- WO-A1-2006/065223
- JP-A- 2007 178 839
- Wikipedia: "iPhoto - Wikipedia", , 17 October 2014 (2014-10-17), pages 1-5, XP055404058, Internet Retrieved from the Internet: URL:https://en.wikipedia.org/wiki/IPhoto [retrieved on 2017-09-05]

## Description

### CROSS REFERENCE TO RELATED APPLICATIONS

This application claims priority from U.S. Provisional Application No. 62/003281 filed May 27, 2014 having attorney docket number PU140089 and U.S. Utility Application No. 14/475,214 filed September 2, 2014 having attorney docket number PU140120-US.

### BACKGROUND OF THE INVENTION

Portable electronic devices are becoming more ubiquitous. These devices, such as mobile phones, music players, cameras, tablets and the like often contain a combination of devices, thus rendering carrying multiple objects redundant. For example, current touch screen mobile phones, such as the Apple iPhone or Samsung Galaxy android phone contain video and still cameras, global positioning navigation system, internet browser, text and telephone, video and music player, and more. These devices are often enabled an multiple networks, such as wifi, wired, and cellular, such as 3G, to transmit and received data.

The quality of secondary features in portable electronics has been constantly improving. For example, early "camera phones" consisted of low resolution sensors with fixed focus lenses and no flash. Today, many mobile phones include full high definition video capabilities, editing and filtering tools, as well as high definition displays. With these improved capabilities, many users are using these devices as their primary photography devices. Hence, there is a demand for even more improved performance and professional grade embedded photography tools.

For example, many users of mobile devices may use the camera feature in either video or camera mode. While taking a photo image, the user may desire to have taken a video instead. Likewise, a user may begin taking a video but realize that an image may have been more desirable. Often in mobile device camera applications, switching between the two modes is confusing or time consuming. A user may continue using the undesired format because the time required to switch formats may cause them to miss the photo opportunity.

Thus, it is desirable to overcome these problems with current cameras embedded in mobile electronic devices.

### SUMMARY OF THE INVENTION

This summary is provided to introduce a selection of concepts in a simplified form that are further described below in the Detailed Description. The Summary is not intended to identify key features or essential features of the claimed subject matter, not is it intended to be used to limit the scope of the claimed subject matter.

In one embodiment, a method is provided for combining media recordings in an electronic device. The method includes receiving a set of media recordings, segmenting the set of media recordings, and saving the segmented media recordings as a single video recording.

Another embodiment involves an apparatus having a camera, memory, and a processor. The camera is for generating a set of media recordings. The memory is for storing the set of media recordings. The processor is configured to receive the set of media recordings, segment the set of media recordings, and save the segmented media recordings as video recording.

Another embodiment involves a method for saving media recordings on an electronic device. The method involves receiving a set of media recordings, processing the set of media recordings to produce one media recording, and saving the produced media recording.

Another embodiment involves an apparatus having a camera, a memory, and a processor. The camera is for generating a set of media recordings. The memory for storing the set of media recordings, and the processor configured to receive the set of media recordings, process the set of media recordings to produce one media recording, and save the produced media recording.

### DETAILED DESCRIPTION OF THE DRAWINGS

These and other aspects, features and advantages of the present disclosure will be described or become apparent from the following detailed description of the preferred embodiments, which is to be read in connection with the accompanying drawings.

In the drawings, wherein like reference numerals denote similar elements throughout the views:
FIG. 1 shows a block diagram of an exemplary embodiment of a mobile electronic device in accordance with the present disclosure;
FIG. 2 shows an exemplary mobile device display having an active display in accordance with the present disclosure;
FIG. 3 shows an exemplary process for image stabilization and reframing in accordance with the present disclosure;
FIG. 4 shows an exemplary mobile device display having a capture initialization in accordance with the present disclosure;
FIG. 5 shows an exemplary process for initiating an image or video capture in accordance with the present disclosure;
FIGs 6A-6B show exemplary mobile device displays having a capture initialization featuring a slide-to-lock functionality for video capture in accordance with the present disclosure;
FIG. 7 shows and exemplary process for initiating video capture using slide-to-lock functionality in accordance with the present disclosure;
FIG. 8 shows and exemplary process for generating a slide show from media recordings in accordance with the present disclosure;
FIG. 9 shows one embodiment of how media recording can be segmented to generate a slide show in accordance with the present disclosure;
FIG. 10 shows an exemplary embodiment of reframing media recordings for inclusion in a slide show in accordance with the present disclosure;
FIG. 11 shows an exemplary process for automatically formatting media recordings in accordance with the present disclosure; and
FIGs 12A-12E show exemplary processes of automatic formatting or converting of media recordings in accordance with the present disclosure.

### DETAILED DESCRIPTION OF THE PREFERRED EMBODIMENT

The examples set out herein illustrate preferred embodiments of the disclosure, and such examples are not to be construed as limiting the scope of the invention in any manner.

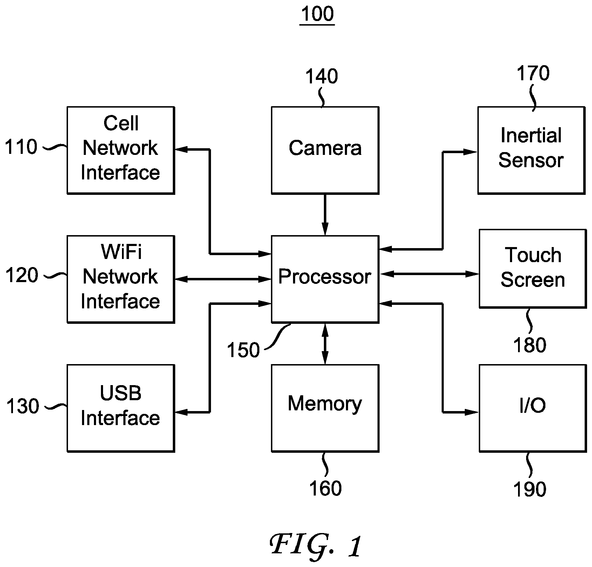

Referring to FIG. 1, a block diagram of an exemplary embodiment of mobile electronic device is shown. While the depicted mobile electronic device is a mobile phone 100, the invention may equally be implemented on any number of devices, such as music players, cameras, tablets, global positioning navigation systems, game consoles, etc. A mobile phone typically includes the ability to send and receive phone calls and text messages, interface with the Internet either through the cellular network or a local wireless network, take pictures and videos, play back audio and video content, and run applications such as word processing, programs, or video games. Many mobile phones include GPS and also include a touch screen panel as part of the user interface.

The mobile phone includes a main processor 150 that is coupled to each of the other major components. The main processor 150 may be a single processor or more than one processor as known by one skilled in the art. The main processor 150, or processors, routes the information between the various components, such as the network interfaces110, 120, camera 140, inertial sensor 170, touch screen 180, and other input/output I/O interfaces 190. The main processor 150 also processes audio and video content for play back either directly on the device or on an external device through the audio/video interface. The main processor 150 is operative to control the various sub devices, such as the camera 140, inertial sensor 170 touch screen 180, and the USB interface 130. The main processor 150 is further operative to execute subroutines in the mobile phone used to manipulate data similar to a computer. For example, the main processor may be used to manipulate image files after a photo has been taken by the camera function 140. These manipulations may include cropping, compression, color and brightness adjustment, and the like.

The cell network interface 110 is controlled by the main processor 150 and is used to receive and transmit information over a cellular wireless network. This information may be encoded in various formats, such as time division multiple access (TDMA), code division multiple access (CDMA) or Orthogonal frequency-division multiplexing (OFDM). Information is transmitted and received from the device trough the cell network interface 110. The interface may consist of multiple antennas encoders, demodulators and the like used to encode and decode information into the appropriate formats for transmission. The cell network interface 110 may be used to facilitate voice or text transmissions, transmit and receive information from the internet. The information may include video, audio, and/or images.

The wireless network interface 120, or wifi network interface, is used to transmit and receive information over a wifi network. This information can be encoded in various formats according to different wifi standards, such as 802.11g, 802.11b, 802.11ac and the like. The interface may consist of multiple antennas encoders, demodulators and the like used to encode and decode information into the appropriate formats for transmission and decode information for demodulation. The wifi network interface 120 may be used to facilitate voice or text transmissions, transmit and receive information from the internet, etc. This information may include video, audio, and/or images.

The universal serial bus (USB) interface 130 is used to transmit and receive information over a wired link, typically to a computer or other USB enabled device. The USB interface 120 can be used to transmit and receive information, connect to the internet, transmit and receive voice and text calls, etc. Additionally, the wired link may be used to connect the USB enabled device to another network using the mobile devices cell network interace 110 or the wifi network interface 120. The USB interface 130 can be used by the main processor 150 to send and receive configuration information to a computer.

A memory 160, or storage device, may be coupled to the main processor 150. The memory 160 may be used for storing specific information related to operation of the mobile device and needed by the main processor 150. The memory 160 may be used for storing audio, video, photos, or other data stored and retrieved by a user.

The inertial sensor 170 may be a gyroscope, accelerometer, axis orientation sensor, light sensor or the like, which is used to determine a horizontal and/or vertical indication of the position of the mobile device.

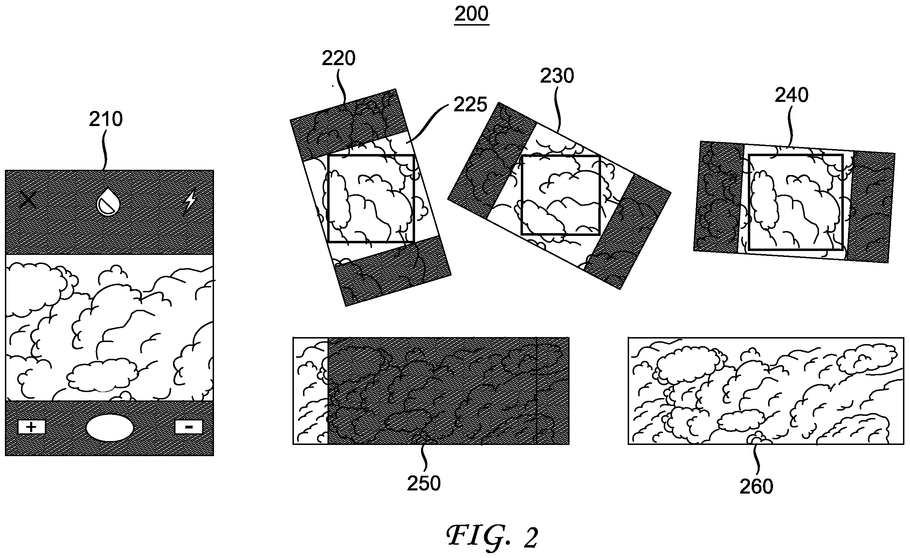

The input output (I/O) interface 190, includes buttons, a speaker/microphone for use with phone calls, audio recording and playback, or voice activation control. The mobile device may include a touch screen 180 coupled to the main processor 150 through a touch screen controller. The touch screen 180 may be either a single touch or multi touch screen using one or more of a capacitive and resistive touch sensor. The smartphone may also include additional user controls such as but not limited to an on/off button, an activation button, volume controls, ringer controls, and a multi-button keypad or keyboard
Turning now to FIG. 2, an exemplary mobile device display having an active display 200 according to the present invention is shown. The exemplary mobile device application is operative for allowing a user to record in any framing and freely rotate their device while shooting, visualizing the final output in an overlay on the device's viewfinder during shooting and ultimately correcting for their orientation in the final output.

According to the exemplary embodiment, when a user begins shooting the user's current orientation is taken into account and the vector of gravity based on the device's sensors is used to register a horizon. For each possible orientation, such as portrait 210, where the device's screen and related optical sensor is taller than wide, or landscape 250, where the device's screen and related optical sensor is wider than tall, an optimal target aspect ratio is chosen. An inset rectangle 225 is inscribed within the overall sensor that is best-fit to the maximum boundaries of the sensor given the desired optimal aspect ratio for the given (current) orientation. The boundaries of the sensor are slightly padded in order to provide 'breathing room' for correction. The inset rectangle 225 is transformed to compensate for rotation 220, 230, 240 by essentially rotating in the inverse of the device's own rotation, which is sampled from the device's integrated inertial sensor. The transformed inner rectangle 225 is inscribed optimally inside the maximum available bounds of the overall sensor minus the padding. Depending on the device's current most orientation, the dimensions of the transformed inner rectangle 225 are adjusted to interpolate between the two optimal aspect ratios, relative to the amount of rotation.

For example, if the optimal aspect ratio selected for portrait orientation was square (1:1) and the optimal aspect ratio selected for landscape orientation was wide (16:9), the inscribed rectangle would interpolate optimally between 1:1 and 16:9 as it is rotated from one orientation to another. The inscribed rectangle is sampled and then transformed to fit an optimal output dimension. For example, if the optimal output dimension is 4:3 and the sampled rectangle is 1:1, the sampled rectangle would either be aspect filled (fully filling the 1:1 area optically, cropping data as necessary) or aspect fit (fully fitting inside the 1:1 area optically, blacking out any unused area with 'letter boxing' or 'pillar boxing'). In the end the result is a fixed aspect asset where the content framing adjusts based on the dynamically provided aspect ratio during correction. So for example a 16:9 video comprised of 1:1 to 16:9 content would oscillate between being optically filled 260 (during 16:9 portions) and fit with pillar boxing 250 (during 1:1 portions).

Additional refinements whereby the total aggregate of all movement is considered and weighed into the selection of optimal output aspect ratio are in place. For example, if a user records a video that is 'mostly landscape' with a minority of portrait content, the output format will be a landscape aspect ratio (pillar boxing the portrait segments). If a user records a video that is mostly portrait the opposite applies (the video will be portrait and fill the output optically, cropping any landscape content that falls outside the bounds of the output rectangle).

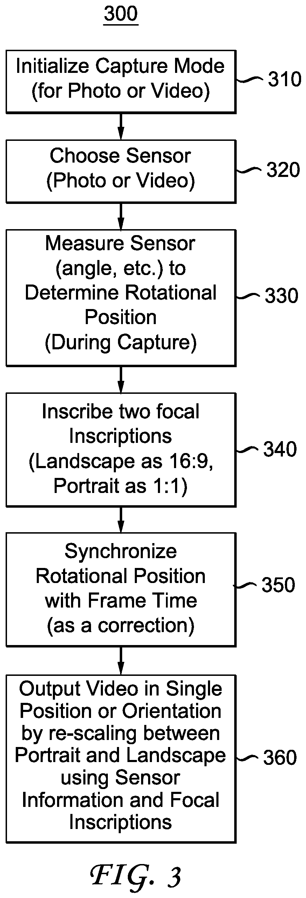

Referring now to FIG. 3, an exemplary process for image stabilization and reframing 300 in accordance with the present disclosure is shown. The system is initialized in response to the capture mode of the camera being initiated 310. The initialization may be initiated according to a hardware or software button, or in response to another control signal generated in response to a user action. Once the capture mode of the device is initiated, the mobile device sensor 320 is chosen in response to user selections. User selections may be made through a setting on the touch screen device, through a menu system, or in response to how the button is actuated. For example, a button that is pushed once may select a photo sensor, while a button that is held down continuously may indicate a video sensor. Additionally, holding a button for a predetermined time, such as 3 seconds, may indicate that a video has been selected and video recording on the mobile device will continue until the button is actuated a second time.

Once the appropriate capture sensor is selected, the system then requests a measurement from an inertial sensor 330. The inertial sensor may be a gyroscope, accelerometer, axis orientation sensor, light sensor or the like, which is used to determine a horizontal and/or vertical indication of the position of the mobile device. The measurement sensor may send periodic measurements to the controlling processor thereby continuously indicating the vertical and/or horizontal orientation of the mobile device. Thus, as the device is rotated, the controlling processor can continuously update the display and save the video or image in a way which has a continuous consistent horizon.

After the inertial sensor has returned an indication of the vertical and/or horizontal orientation of the mobile device, the mobile device depicts an inset rectangle on the display indicating the captured orientation of the video or image 340. As the mobile device is rotated, the system processor continuously synchronizes inset rectangle with the rotational measurement received from the inertial sensor 350.

The user may optionally indicate a preferred final video or image ration, such as 1:1, 9:16, 16:9, or any other ratio selected by the user. The system may also store user selections for different ratios according to orientation of the mobile device. For example, the user may indicate a 1:1 ratio for video recorded in the vertical orientation, but a 16:9 ratio for video recorded in the horizontal orientation. In this instance, the system may continuously or incrementally rescale video 360 as the mobile device is rotated. Thus a video may start out with a 1:1 orientation, but could gradually be rescaled to end in a 16:9 orientation in response to a user rotating from a vertical to horizontal orientation while filming. Optionally, a user may indicate that the beginning or ending orientation determines the final ratio of the video.

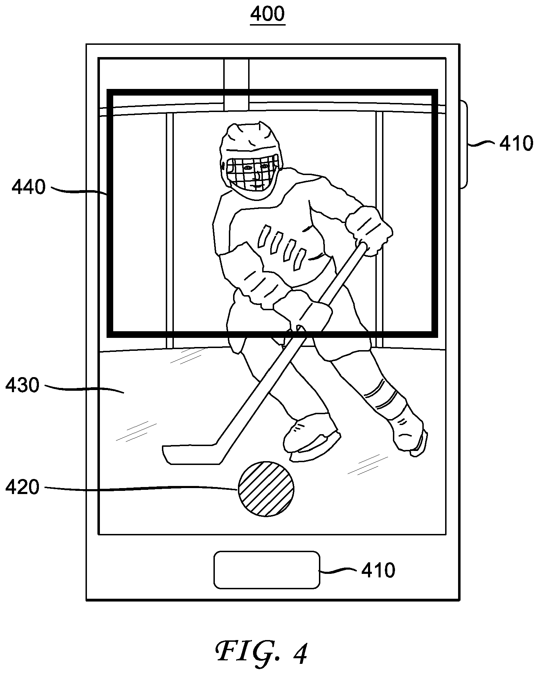

Turning now to FIG. 4, an exemplary mobile device display having a capture initialization 400 is shown. The exemplary mobile device is show depicting a touch tone display for capturing images or video. According to an aspect of the present invention, the capture mode of the exemplary device may be initiated in response to a number of actions. Any of hardware buttons 410 of the mobile device may be depressed to initiate the capture sequence. Alternatively, a software button 420 may be activated through the touch screen to initiate the capture sequence. The software button 420 may be overlaid on the image 430 displayed on the touch screen. The image 430 acts as a viewfinder indicating the current image being captured by the image sensor. An inscribed rectangle 440, as described previously, may also be overlaid on the image to indicate an aspect ratio of the image or video to be captured.

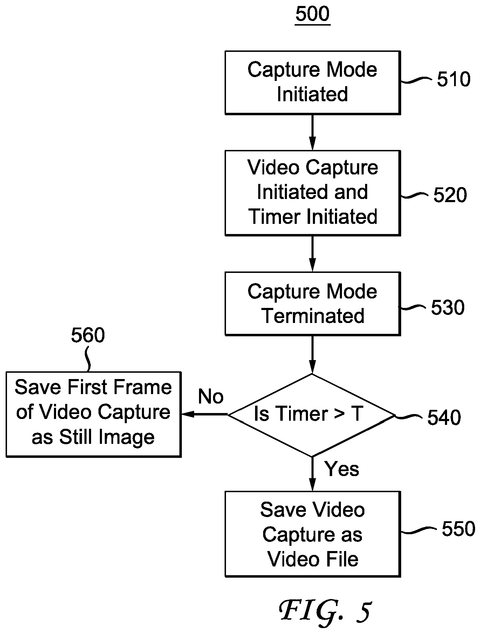

Referring now to FIG. 5, an exemplary process for initiating an image or video capture 500 in accordance with the present disclosure is shown. Once the imaging software has been initiated, the system waits for an indication to initiate image capture. Once the image capture indication has been received by the main processor 510, the device begins to save the data sent from the image sensor 520. In addition, the system initiates a timer. The system then continues to capture data from the image sensor as video data. In response to a second indication from the capture indication, indicating that capture has been ceased 530, the system stops saving data from the image sensor and stops the timer.

The system then compares the timer value to a predetermined time threshold 540. The predetermined time threshold may be a default value determined by the software provider, such as 1 second for example, or it may be a configurable setting determined by a user. If the timer value is less than the predetermined threshold 540, the system determines that a still image was desired and saves 560 the first frame of the video capture as a still image in a still image format, such as jpeg or the like. The system may optionally chose another frame as the still image. If the timer value is greater than the predetermined threshold 540, the system determines that a video capture was desired. The system then saves 550 the capture data as a video file in a video file format, such as mpeg or the like. The system may then return to the initialization mode, waiting for the capture mode to be initiated again. If the mobile device is equipped with different sensors for still image capture and video capture, the system may optionally save a still image from the still image sensor and start saving capture data from the video image sensor. When the timer value is compared to the predetermined time threshold, the desired data is saved, while the unwanted data is not saved. For example, if the timer value exceeds the threshold time value, the video data is saved and the image data is discarded.

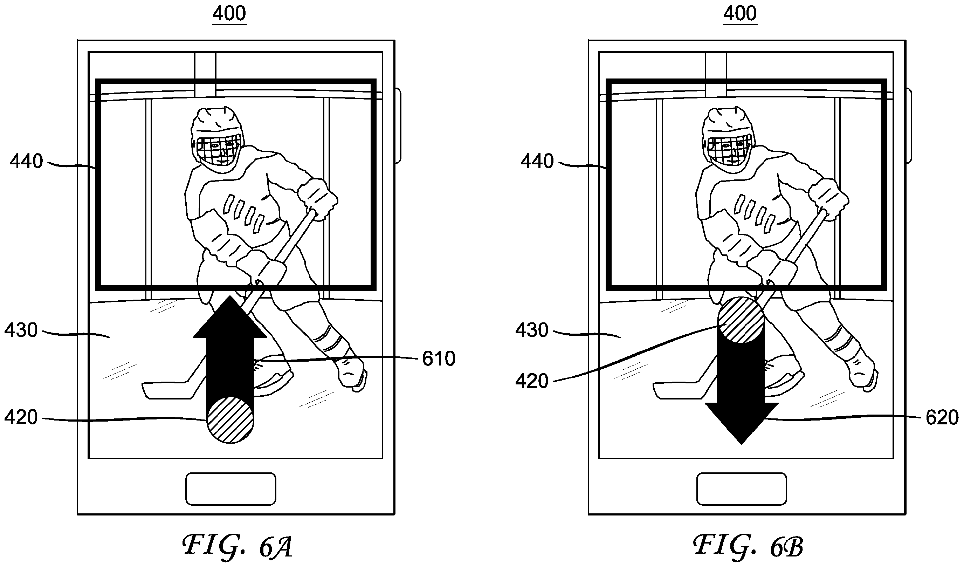

As mentioned above in regard to FIGs 4 and 5, a user can press a button one time for a picture, or hold the button for a video. However, a user may wish to continue filming video, but not continue to hold the virtual button. Thus in one embodiment, the user may then hold and slide up to "lock" the video recording feature. The user releases the video recording feature by touching the screen or "unlocking" the button by sliding down. An example of this can be seen in FIGs 6A and 6B. Here the software button or capture key 420 provided on the touch screen is slid up as represented by arrow 610 in FIG. 6A to engage video capture. To disengage or stop video capture, the software button or capture key 420 is slid down as represented by arrow 620 in FIG. 6B. It should be understood the directions and references to "up" and "down" are for illustrative purposes only and that such functionality could be implemented in using sliding motions in any direction.

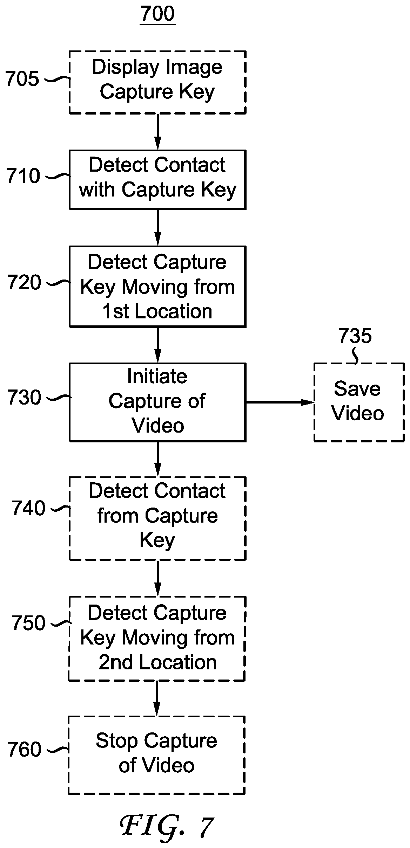

FIG.7 depicts a flow diagram 700 of an exemplary methodology for implementing such a "slide-to-lock" functionality for video capture. At the most basic level, the methodology involves three steps. The first step is detecting contact with a capture key or software button (step 710). The next step is detecting movement of the contact, while continuous contact with the touch screen is maintained, from a first predefined location (step 720). The last step of the basic method is initiating video capture if the moving of the image capture key on the touch-sensitive display results in movement of the image capture key from the first predefined location to a second predefined location on the touch-sensitive display (step 730).

In certain embodiments, the methodology can further include additional steps. One such step is displaying the image capture key or software button on the touch screen (step 705). Another optional step is saving the captured video (step 735).

FIG. 7 also depicts optional steps for disengaging or stopping video capture. The first of these steps is detecting contact with the touch screen at a second predefined region corresponding to an image capture key (step 740). The next step is detecting movement of the contact, while continuous contact with the touch screen is maintained, from the second predefined location (step 750). The last step of deactivating video capture show is stopping video capture if the moving of the image capture key on the touch-sensitive display results in movement of the image capture key from the second predefined location to the first predefined location on the touch-sensitive display (step 760).

Once media recording, such as still images or videos, have been acquired using any of techniques discussed above, a user may want to format or package the media recording for more enjoyable consumption. One such type of formatting is grouping the media recording into a slide-show video. Using such slide show format functionality, when a user shoots multiple photos and videos in a single session, a user has the option of saving the media as a single video. The start timing of the photos and video can be determined through a default time or through the time stamps of the media. The media is then stored as one video.

For example, a user may take a series of still photos and then a video. The user then takes a few more photos and then saves the media. The user is given the option to save the content as individual photo and video files, or save the content as one video file. If the user opts to save the content as one video file, the user is further given the option to have the photos displayed in the video according to the time stamps of the photos. Thus, if the user took the first photo and then the second 3 seconds later and the third 1 second after that, the video would display the first photo for 3 seconds, the second for 1 second, and then the third... etc. A desirable effect is that a viewer of the video would also get a sense of timing with the content. The video shot would be placed in overall video media according to the time stamps of the video. Alternatively, the user may have the option to have the photos and video spaced at equal interviews. This spacing may be determined in part by the length of a video or by a default setting or a time determined by the user.

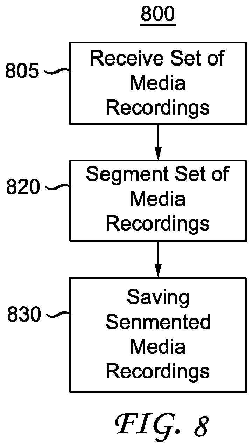

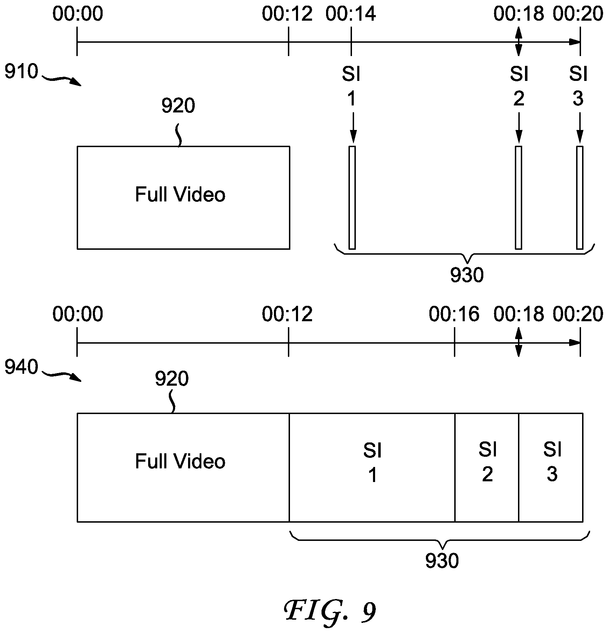

FIG. 8 depicts a flow diagram 800 of an exemplary methodology for implementing such slide-show functionality. At the most basic level, the methodology involves three steps. The first step is receiving a set of media recordings, such as still images and videos (step 810). The next step is segmenting the set of media recordings (step 820). The last step of the basic method is saving the segmented media recordings as a single video recording (step 830). An example of how segmenting is performed can be seen in FIG. 9

FIG. 9 illustrates a first exemplary set of media recordings and a first segmentation example. The raw video and still image recording 910 results is an exemplary first set of media recordings using a media device, such as media device 400. A user operating media device 400 can use a button, such as software button 420, on the media device to capture media recordings such as the set of media recordings 910 depicted in FIG. 9. In one possible operation, a user would hold a capture control button, or other media capture control mechanism, and start capturing and recording video. If a user held or actuated the capture control button 420 of the media device for 12 seconds, then the full video portion 920 of the set of media recordings 910 can be captured. The time indices of FIG. 9 indicate that the raw recorded video 920 is 12 seconds in duration. The user released the capture button at the 12 second mark. Two seconds later, the user tapped the capture button 420 and the media device 400 effectively recorded a still image S1 at the 14 second mark. Four second later, at the 18 second mark, the user once again tapped the capture button 420 and a second still image S2 was captured. Finally, two second later, at the 20 second mark, the user once again tapped the capture button 420 and a third still image S3 was captured. The full raw video 920 and the set of three still images 930 together make up the first example set of media recordings 910. Note, that the full set of recordings is 20 seconds in capture time. According to an embodiment of the invention, such raw media recordings 910 is segmented such that the video 920 is comprises 12 seconds of the slide show video 940, still image S1 comprises 4 seconds (the time between still images S1 and S2), still image S2 comprises 2 second (the time between still imaged S2 and S3), and still images S3 comprises 2 seconds (the remainder of the slide show duration). In other embodiments, the duration of the slide show as well as the duration of any of the media recordings can be adjusted by the user.

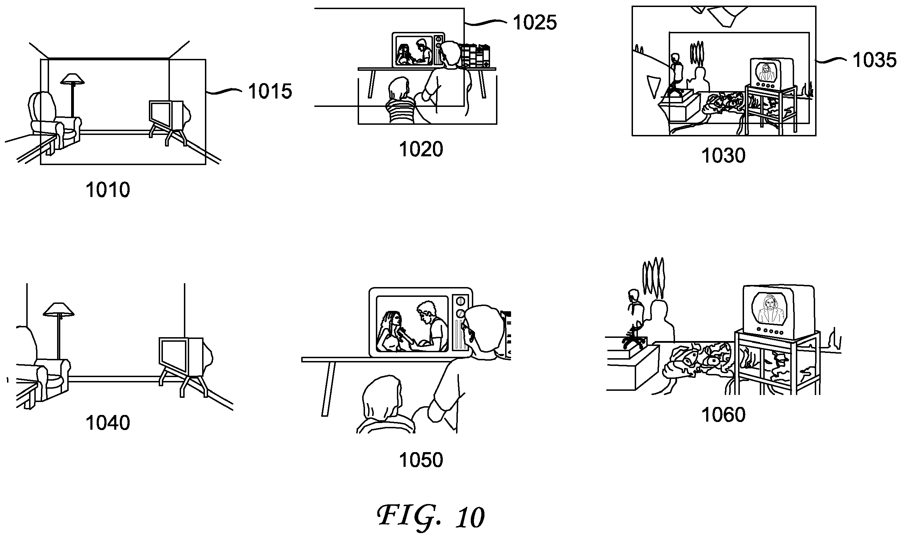

A problem arises when a user generates a video using multiple still images or videos displayed in quick succession. A viewer may not be able to quickly focus and determine a region of interest of a photo. The disclosed functionality addresses this problem by cropping a photo such that the region of interest of all photos in the sequence are located in relatively the same location. In certain embodiments, when multiple photos and videos are added to one media video presentation, regions of interest are identified and are reframed to relocated the region of interest the same location in the video permitting the viewer to quickly comprehend the video. The location of the region of interest can be traversed over the video in a uniform spatially and temporally. Objects of interest in the region of interest can be resized to fit into the viewer's perceptional area so objects of interest are roughly a consistent size. An example of this can be seen in FIG. 10.

In FIG 10, three images 1010, 1020 and 1030 are processed to determine an area of interest. In image 1010 the area of interest is indicated by framing 1015. In image 1020 the area of interest is indicated by framing 1025. In image 1030 the area of interest is indicated by framing 1035. The result of the reframing can be seen in figures 1040, 1050, and 1060. Image 1040 is the framing 1015 of figure 1010 resized to fill the full image size. Image 1050 is the framing 1025 of figure 1020 resized to fill the full image size. Image 1060 is the framing 1035 of figure 1030 resized to fill the full image size. Other possible implementation will be apparent to one skilled in the art.

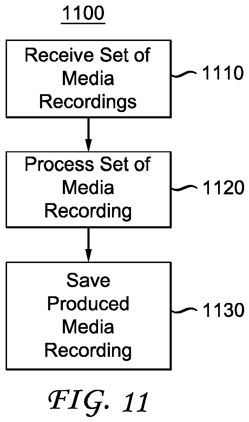

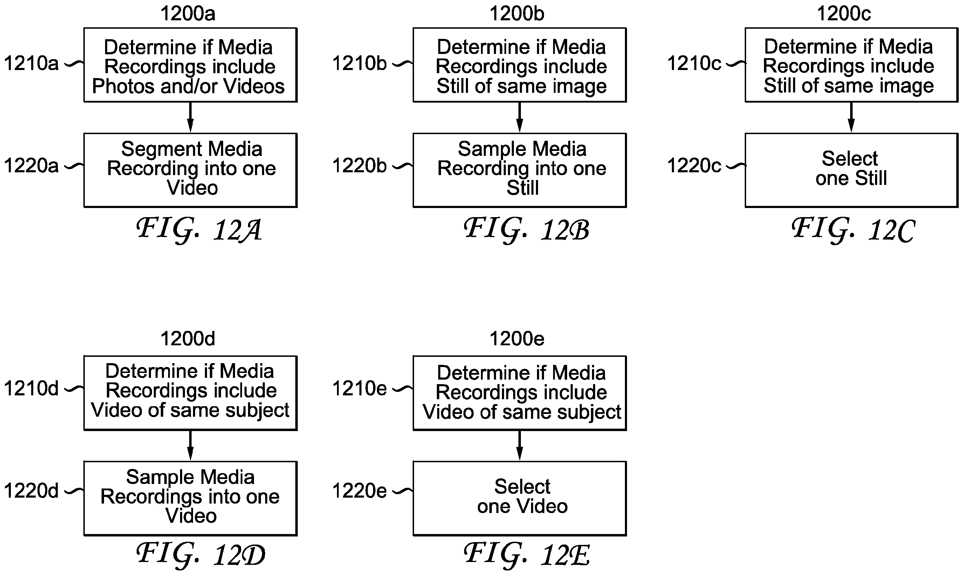

In another other embodiments, once media recording, such as still images or videos, have been acquired using any of techniques discussed above the content may be packaged or formatted automatically base on the user's interaction or history, such as the type of media recordings and user actions. For example, if a user does a few bursts of still images and then holds for video. The system can determine that a video is desired. In another example, if a user takes multiple shots of the same image, they are probably looking for the best image. The multiple images can be sampled or otherwise combined into one good image, or the best image can be selected, or the user can be presented with the option of choosing the best of multiple images to. A similar functionality can be implemented for sets of multiple videos. An example of a methodology for implementing this functionality can be seen in FIG. 11 and FIGs. 12A-12E.

FIG. 11 depicts a flow diagram 1100 of an exemplary methodology for implementing automatic media conversion or formatting. At the most basic level, the methodology involves three steps. The first step is receiving a set of media recordings, such as still images and videos (step 1110). The next step is processing the set of media recordings to produce a single media recording (step 1120). The last step of the basic method is saving the produced media recordings as a single video recording (step 1130). Some examples of processing that can be performed can be seen in FIGs. 12A-12E.

FIG. 12A depicts an exemplary flow diagram 1200a for automatic conversion processing similar to the slide show functionality discussed above. The first step in the processing is determining that the set of media recordings contains a mix of still images and videos (step 1210a). Based on this determination, the media recordings are segmented together to form a single video media recording (step 1220a).

FIG. 12B depict an exemplary flow diagram 1200b for automatic conversion processing that handles a set of media recordings having set of photos of the same image. The first step in the processing is determining that the set of media recordings contains still images of the same image (step 1210b). Based on this determination, the media recordings are sampled and combined to form a single still image media recording (step 1220b).

FIG. 12C depict another exemplary flow diagram 1200c for automatic conversion processing that handles a set of media recordings having set of photos of the same image. The first step in the processing is determining that the set of media recordings contains still images of the same image (step 1210c). Based on this determination, the best still image is selected from the multiple still images (step 1220c).

FIG. 12D depict an exemplary flow diagram 1200d for automatic conversion processing that handles a set of media recordings having multiple videos of the same subject. The first step in the processing is determining that the set of media recordings contains videos of the same subject (step 1210d). Based on this determination, the media recordings are sampled and combined to form a single video media recording (step 1220d).

FIG. 12E depict another exemplary flow diagram 1200e for automatic conversion processing that handles a set of media recordings having multiple videos of the same subject. The first step in the processing is determining that the set of media recordings contains still videos of the same subject (step 1210e). Based on this determination, the best video is selected from the multiple videos (step 1220e).

It should be understood that the elements shown and discussed above, may be implemented in various forms of hardware, software or combinations thereof. Preferably, these elements are implemented in a combination of hardware and software on one or more appropriately programmed general-purpose devices, which may include a processor, memory and input/output interfaces. The present description illustrates the principles of the present disclosure. It will thus be appreciated that those skilled in the art will be able to devise various arrangements that, although not explicitly described or shown herein, embody the principles of the disclosure and are included within its scope. All examples and conditional language recited herein are intended for informational purposes to aid the reader in understanding the principles of the disclosure and the concepts contributed by the inventor to furthering the art, and are to be construed as being without limitation to such specifically recited examples and conditions. Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure. Thus, for example, it will be appreciated by those skilled in the art that the block diagrams presented herewith represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

## Claims

1. A method performed by a media capturing device, comprising:
receiving a set of media recordings (810) using a button of the device, wherein the set of media recordings comprising video recordings (920) and still image recordings (930) captured in chronological order using the same button;
segmenting the set of media recordings (820) by increasing a duration of at least one of the still images (930) based on an amount time to a next chronological media recording in the set of media recordings; and
saving (830) the segmented media recordings as a single video recording.

2. The method of claim 1 wherein the segmenting of the set of media recording is in chronological order is based on time stamps associated with the media recordings.

3. The method of claim 1 wherein the amount of time a media recording is displayed as part of the segmented media recordings is user selected.

4. The method of claim 1 wherein the segmenting the set of media recordings further comprises:
determining a region of interest (1015, 1025, 1035) across the set of media recordings; and
reframing the media recordings such that the region of interest is in the same location across the segmented media recordings.

5. The method of claim 1 wherein the reframing the media recordings comprises at least one of zooming and cropping the media recordings.

6. An apparatus comprising:
a camera (140) configured to capture a set of media recordings using a button (420) of the apparatus, wherein the set of media recordings comprising video recordings and still image recordings captured in chronological order using the same button;
a processor (150) configured to segment the set of media recordings by increasing a duration of at least one of the still images based on an amount time to a next chronological media recording in the set of media recordings, and save the segmented media recordings as a single video recording in a memory (160), a camera configured to capture a set of media recordings using a button of the apparatus, wherein the set of media recordings comprising video recordings and still image recordings captured in chronological order using the same button.

7. The apparatus of claim 7 wherein the processor segments the set of media recordings by being further configured to
determine a region of interest (1015, 1025, 1035) across the set of media recordings; and
reframe the media recordings such that the region of interest is in the same location across the segmented media recordings.

8. The apparatus of claim 6, wherein said processor is further configured to: process the set of media recordings to produce one media recording, and save the produced media recording; determine that the set of media recordings includes at least one type of media recording selected from the group comprising: still images and videos.

9. The apparatus of claim 6 wherein the processor is further configured to:
determine that the set of media recordings comprises still images of the same image; and
sample the still images of the same images to produce one still image media recording.

10. The apparatus of claim 6 wherein the processor is further configured to:
determine that the set of media recordings comprises a set of still images of the same image; and
select one still image from the set of still images.

11. The apparatus of claim 6 wherein the processor is further configured to:
determine that the set of media recordings comprises videos of the same subject matter; and
sample the videos of the same subject matter to produce one video media recording.

12. The apparatus of claim 6 wherein the processor is further configured to:
determine that the set of media recordings comprises videos of the same subject matter; and
select one video from the set of videos.

## Patentansprüche

1. Verfahren, das durch eine Medienaufnahmevorrichtung ausgeführt wird, wobei das Verfahren umfasst:
Empfangen einer Menge von Medienaufzeichnungen (810) unter Verwendung einer Schaltfläche der Vorrichtung, wobei die Menge von Medienaufzeichnungen Videoaufzeichnungen (920) und Standbildaufzeichnungen (930) umfasst, die unter Verwendung derselben Schaltfläche in chronologischer Reihenfolge aufgenommen werden;
Segmentieren der Menge von Medienaufzeichnungen (820) durch Erhöhen einer Dauer mindestens eines der Standbilder (930) auf der Grundlage einer Zeitdauer bis zu einer nächsten chronologischen Medienaufzeichnung in der Menge von Medienaufzeichnungen; und
Sichern (830) der segmentierten Medienaufzeichnungen als eine einzelne Videoaufzeichnung.

2. Verfahren nach Anspruch 1, wobei das Segmentieren der Menge von Medienaufzeichnungen auf der Grundlage von den Medienaufzeichnungen zugeordneten Zeitstempeln in chronologischer Reihenfolge erfolgt.

3. Verfahren nach Anspruch 1, wobei die Zeitdauer, die eine Medienaufzeichnung als Teil der segmentierten Medienaufzeichnungen angezeigt wird, durch den Nutzer gewählt wird.

4. Verfahren nach Anspruch 1, wobei das Segmentieren der Menge von Medienaufzeichnungen ferner umfasst:
Bestimmen eines interessierenden Gebiets (1015, 1025, 1035) über die Menge von Medienaufzeichnungen; und
Bildneueinrichtung der Medienaufzeichnungen in der Weise, dass das interessierende Gebiet über die segmentierten Medienaufzeichnungen an demselben Ort liegt.

5. Verfahren nach Anspruch 1, wobei die Bildneueinrichtung der Medienaufzeichnungen das Zoomen und/oder das Beschneiden der Medienaufzeichnungen umfasst.

6. Vorrichtung, die umfasst:
eine Kamera (140), die dafür konfiguriert ist, unter Verwendung einer Schaltfläche (420) der Vorrichtung eine Menge von Medienaufzeichnungen aufzunehmen, wobei die Menge von Medienaufzeichnungen Videoaufzeichnungen und Standbildaufzeichnungen, die unter Verwendung derselben Schaltfläche in chronologischer Reihenfolge aufgenommen werden, umfasst;
einen Prozessor (150), der dafür konfiguriert ist, die Menge von Medienaufzeichnungen durch Erhöhen einer Dauer mindestens eines der Standbilder auf der Grundlage einer Zeitdauer bis zu einer nächsten chronologischen Medienaufzeichnung in der Menge von Medienaufzeichnungen zu segmentieren und die segmentierten Medienaufzeichnungen als einzelne Videoaufzeichnung in einem Speicher (160) zu sichern, wobei eine Kamera dafür konfiguriert ist, eine Menge von Medienaufzeichnungen unter Verwendung einer Schaltfläche der Vorrichtung aufzunehmen, wobei die Menge von Medienaufzeichnungen Videoaufzeichnungen und Standbildaufzeichnungen umfasst, die unter Verwendung derselben Schaltfläche in chronologischer Reihenfolge aufgenommen werden.

7. Vorrichtung nach Anspruch 7, wobei der Prozessor die Menge von Medienaufzeichnungen dadurch segmentiert, dass er ferner konfiguriert ist zum:
Bestimmen eines interessierenden Gebiets (1015, 1025, 1035) über die Menge von Medienaufzeichnungen; und
Bildneueinrichtung der Medienaufzeichnungen in der Weise, dass das interessierende Gebiet über die segmentierten Medienaufzeichnungen an demselben Ort ist.

8. Vorrichtung nach Anspruch 6, wobei der Prozessor ferner konfiguriert ist zum:
Verarbeiten der Menge von Medienaufzeichnungen zum Erzeugen einer Medienaufzeichnung und Sichern der erzeugten Medienaufzeichnung; Bestimmen, dass die Menge von Medienaufzeichnungen mindestens einen Typ einer Medienaufzeichnung enthält, der aus der Gruppe ausgewählt ist, die umfasst: Standbilder und Videos.

9. Vorrichtung nach Anspruch 6, wobei der Prozessor ferner konfiguriert ist zum:
Bestimmen, dass die Menge von Medienaufzeichnungen Standbilder desselben Bilds umfasst; und
Abtasten der Standbilder derselben Bilder, um eine Standbildmedienaufzeichnung zu erzeugen.

10. Vorrichtung nach Anspruch 6, wobei der Prozessor ferner konfiguriert ist zum:
Bestimmen, dass die Menge von Medienaufzeichnungen eine Menge von Standbildern desselben Bilds umfasst; und
Auswählen eines Standbilds aus der Menge von Standbildern.

11. Vorrichtung nach Anspruch 6, wobei der Prozessor ferner konfiguriert ist zum:
Bestimmen, dass die Menge von Medienaufzeichnungen Videos desselben Gegenstands umfasst; und
Abtasten der Videos desselben Gegenstands, um eine Videomedienaufzeichnung zu erzeugen.

12. Vorrichtung nach Anspruch 6, wobei der Prozessor ferner konfiguriert ist zum:
Bestimmen, dass die Menge von Medienaufzeichnungen Videos desselben Gegenstands umfasst; und
Auswählen eines Videos aus der Menge von Videos.

## Revendications

1. Procédé mis en oeuvré par un dispositif de prise de vue multimédia, comprenant :
réception d'un ensemble d'enregistrements multimédia (810) à l'aide d'un bouton du dispositif, dans lequel l'ensemble des enregistrements multimédia comprend des enregistrements vidéo (920) et des enregistrements d'images fixes (930) capturés en ordre chronologique à l'aide du même bouton ;
segmentation de l'ensemble des enregistrements multimédia (820) en augmentant une durée d'au moins l'une des images fixes (930) basée sur une durée définie jusqu'à un enregistrement multimédia suivant chronologiquement dans l'ensemble des enregistrements multimédia ; puis l'enregistrement (830) des enregistrements multimédia segmentés en un seul enregistrement vidéo.

2. Procédé selon la revendication 1, dans lequel la segmentation de l'ensemble des enregistrements multimédia se fait en ordre chronologique en fonction des horodatages associés aux enregistrements multimédia.

3. Procédé selon la revendication 1, dans lequel la durée d'un enregistrement multimédia s'affiche dans les enregistrements multimédia segmentés et est sélectionnée par l'utilisateur.

4. Procédé selon la revendication 1, dans lequel la segmentation de l'ensemble des enregistrements multimédia comprend en outre :
détermination d'une région d'intérêt (1015, 1025, 1035) dans l'ensemble des enregistrements multimédia ; et
recadrage des enregistrements multimédia de sorte que la région d'intérêt soit au même endroit dans les enregistrements multimédia segmentés.

5. Procédé selon la revendication 1, dans lequel le recadrage des enregistrements multimédia comprend au moins une étape de zoom ou de rognage des enregistrements multimédia.

6. Appareil comprenant :
une caméra (140) configurée pour capturer un ensemble d'enregistrements multimédia à l'aide d'un bouton (420) de l'appareil, dans lequel l'ensemble des enregistrements multimédia comprend des enregistrements vidéo et des enregistrements d'images fixes capturés en ordre chronologique à l'aide du même bouton ;
un processeur (150) configuré pour segmenter l'ensemble des enregistrements multimédia en augmentant une durée d'au moins l'une des images fixes selon une durée définie jusqu'à un enregistrement multimédia suivant chronologiquement dans l'ensemble des enregistrements multimédia ; et enregistrer les enregistrements multimédia segmentés en un seul enregistrement vidéo dans une mémoire (160), une caméra configurée pour capturer un ensemble d'enregistrements multimédia à l'aide d'un bouton de l'appareil, dans lequel l'ensemble des enregistrements multimédia comprend des enregistrements vidéo et des enregistrements d'images fixes capturés en ordre chronologique à l'aide du même bouton.

7. Appareil selon la revendication 7, dans lequel le processeur segmente l'ensemble des enregistrements multimédia, étant en outre configuré pour
déterminer une région d'intérêt (1015, 1025, 1035) dans l'ensemble des enregistrements multimédia ; et
recadrer des enregistrements multimédia de sorte que la région d'intérêt soit au même endroit dans les enregistrements multimédia segmentés.

8. Appareil selon la revendication 6, dans lequel ledit processeur est en outre configuré pour : traiter l'ensemble des enregistrements multimédia pour produire un seul enregistrement multimédia, et enregistrer l'enregistrement multimédia produit ; déterminer que l'ensemble des enregistrements multimédia inclut au moins un type d'enregistrement multimédia sélectionné à partir du groupe comprenant : des images fixes et des vidéos.

9. Appareil selon la revendication 6, dans lequel le processeur est en outre configuré pour :
déterminer que l'ensemble d'enregistrements multimédia comprend des images fixes de la même image ; et
échantillonner les images fixes des mêmes images pour produire un seul enregistrement multimédia d'images fixes.

10. Appareil selon la revendication 6, dans lequel le processeur est en outre configuré pour :
déterminer que l'ensemble d'enregistrements multimédia comprend un ensemble d'images fixes de la même image ; et
sélectionner une image fixe à partir de l'ensemble des images fixes.

11. Appareil selon la revendication 6, dans lequel le processeur est en outre configuré pour :
déterminer que l'ensemble des enregistrements multimédia comprend des vidéos du même sujet ; et
échantillonner les vidéos du même sujet pour produire un seul enregistrement multimédia vidéo.

12. Appareil selon la revendication 6, dans lequel le processeur est en outre configuré pour :
déterminer que l'ensemble des enregistrements multimédia comprend des vidéos du même sujet ; et
sélectionner une vidéo dans l'ensemble de vidéos.
